# EUROPEAN PATENT SPECIFICATION

(11) **EP 4 162 356 B1**
(45) Date of publication and mention of the grant of the patent: **12.03.2025**
(21) Application number: 21729556.7
(22) Date of filing: 02.06.2021
(51) Int. Cl.: G06F 8/34, G01J 3/50, G01J 3/46, G06F 9/448

(54) **VISUAL MACRO LANGUAGE FOR COLORIMETRIC SOFTWARE**
VISUELLE MAKROSPRACHE FÜR KOLORIMETRISCHE SOFTWARE
MACRO-LANGAGE VISUEL POUR LOGICIEL COLORIMÉTRIQUE

(30) Priority: 05.06.2020 EP 20178477
(43) Date of publication of application: 12.04.2023
(73) Proprietor: BASF Coatings GmbH, 48165 Münster (DE)
(72) Inventor: KLAHM, Sebastian, 48165 Muenster (DE); ROEHRIG, Ruediger, 48165 Muenster (DE)
(74) Representative: BASF IP Association
(86) International application number: PCT/EP2021/064737
(87) International publication number: WO 2021/245114

(56) References cited:
- TW-U- M 591 535
- DIPL.-ING KLAUS RUPPRECHT: "Node-RED in industrial applications", 5 February 2018 (2018-02-05), XP055750395, Retrieved from the Internet <URL:https://www.systec-electronic.com/fileadmin/Redakteur/Unternehmen/Aktuelles/Rueckblick_ew18/20180205_Node_RED_in_industriellen_Anwendungen_Ruprecht_final.pdf> [retrieved on 20201113]

## Description

### FIELD OF THE INVENTION

The present invention generally relates to color quality control, and in particular to a computer-implemented method for providing color quality control applications to a user, a system, a computer program element, and a computer readable medium.

### BACKGROUND OF THE INVENTION

The appearance of the coating quality requirements of e.g. paint coatings on car bodies, include the color of the coating. Colorimeters, spectrophotometers, and other special instruments are used to measure the standard color and the color of the test model, and automatically calculate the outstanding difference. Software is used e.g. in laboratories or in quality control e.g. at the OEMs production lines. However, it may be complex and demands the user to insensitively work into the application, although these tools offer a huge amount of workflows. These workflows are not part of the standard of the tool's functionality and hence the software has to offer possibilities to let the customer implement these customized workflows themselves. TW M 591 535 U describes a cloud quality control system for textile printing. Dipl. Ing Klaus Rupprecht: "Node-RED in industrial applications", February 2018 , pages 1-19, retrieved from https://www.systec-electronic.com/fileadmin/Redakteur/Unternehmen/Aktuelles/ Rueckblick_ew18/20180205_Node_RED_in_industriellen_Anwendungen_Ruprecht_final.pdf, discloses the use of Node-Red to create a customized workflow, which can access hardware devices, APIs and online services. It discloses custom nodes with predefined functionality. Nodes can be connected to create custom protocols.

### SUMMARY OF THE INVENTION

There may be a need to improve the implementation of customized workflow.

The object of the present invention is solved by the subject-matter of the independent claims, wherein further embodiments are incorporated in the dependent claims. It should be noted that the following described aspects of the invention apply also for the computer-implemented method for providing color quality control applications to a user, the system, the computer program element, and the computer readable medium.

According to a first aspect of the present invention, there is provided a computer-implemented method for providing color quality control applications to a user. The computer-implemented method comprises:
- presenting one or more applications in a graphical user interface, GUI, wherein the one or more applications include (i) one or more software-as-a-service (SaaS) applications for providing one or more color quality control functionalities and/or (ii) one or more on-premises applications for providing one or more color quality control functionalities. The GUI comprises one or more macro language widgets including a plurality of macro building blocks with each macro building block representing a dedicated functionality comprising a predefined operation and/or a predefined workflow for the associated macro building block. At least one macro building block is correlated with at least one of the one or more SaaS applications and/or at least one of the one or more on-premises applications; and
- selecting a number of macro building blocks and connecting them with each other via socket connections to provide a desired script, which is executable to create a customized protocol to provide a sequence of functionalities.

In other words, it is proposed to use a macro language to generate custom workflow protocols in a colorimetric software application. Its purpose is to simplify the usage of a macro language by providing a visual programming language. The proposed method uses so-called nodes, which can be connected with each other and/or modified by adding meta data to visually generate a procedure for a certain workflow. Besides the feature that the whole application can be operated by composing nodes to a whole macro, it is also noted that this visual programming language may also be implemented in the context of an off-premises application, which means it communicates with multiple services, such as local services and/or cloud services, and devices, such as local and remote devices.

In some examples, the one or more applications may comprise SaaS applications. The consumer does not manage or control the underlying cloud infrastructure including network, servers, operating systems, storage, or even individual application capabilities, with the possible exception of limited user-specific application configuration settings.

In some examples, the one or more applications may comprise on-premises applications, e.g. using an on-premises server using one or more networks (e.g., public/private networks, secure/unsecure networks, wired/wireless networks, etc.).

In some examples, the one or more applications may comprise both on-premises and SaaS applications. For example, a hybrid environment may be used where mission critical data and applications reside on-premises and other, less critical, data and applications may be deployed in the cloud.

According to an embodiment of the present invention, the one or more SaaS applications include a web browser executable application.

In other words, the SaaS applications may be accessible from various client devices through a thin client interface such as a web browser. The user can simply open a web browser and select a number of macro building blocks and connect them with each other via socket connections to create a customized workflow. Accordingly, the user does not need to fulfil any requirements but has a web browser installed.

According to the first aspect of the present invention, the one or more SaaS applications include at least one of:
- a calculation module configured to compare color measurement data to color reference data to assess and/or to classify the color measurement data;
- a device configuration module configured to access configuration data of one or more color measurement devices;
- a measurement data module configured to allow the user to access and to trigger, via a browser based and/or the on-premises based GUI, a color measurement device to perform one color measurement or a series of color measurements;
- a data interface configured to provide the color reference data to the calculation module and/or configured to provide the color measurement data to the calculation module;
- an authentication module configured to provide an interface through which the user can authenticate to access a user-requested service.

According to an embodiment of the present invention, the one or more on-premises applications include a web browser executable application.

According to the first aspect of the present invention, the one or more on-premises applications include at least one of:
- a calculation module configured to compare color measurement data to color reference data to assess and/or to classify the color measurement data;
- a device configuration module configured to access configuration data of one or more color measurement devices;
- a measurement data module configured to allow the user to access and to trigger, via the webpage and/or the application program, a color measurement device to perform one color measurement or a series of color measurements;
- a data interface configured to provide the color reference data to the calculation module and/or configured to provide the color measurement data to the calculation module;
- an authentication module configured to provide an interface through which the user can authenticate to access a user-requested service.

According to an embodiment of the present invention, at least one macro building block is configured to receive parameter inputs.

According to an embodiment of the present invention, the GUI has an Angular code base whose product is executable within a web browser.

According to an embodiment of the present invention, the computer-implemented method further comprises at least one of:
- sharing an arrangement of macro building blocks;
- storing an arrangement of macro building blocks; and
- loading an arrangement of macro building block.

According to a second aspect of the present invention, there is provided a system that comprises:
- a web server configured to present one or more software-as-a-service, SaaS, applications in a graphical user interface, GUI, for providing one or more color quality control functionalities;
   wherein the GUI comprises one or more macro language widgets including a plurality of macro building blocks with each macro building block representing a dedicated functionality comprising a predefined operation and/or a predefined workflow for the associated macro building block; wherein at least one macro building block is correlated with at least one of the one or more SaaS applications; and
   wherein the GUI is configured to allow a user to select a number of macro building blocks and to connect them with each other via socket connections to provide a desired script, which is executable to create a customized protocol to provide a sequence of functionalities; and
- a client device configured to display the GUI presented by the web server and to allow a user to select a number of macro building blocks and to connect them with each other via socket connections to provide a desired script, and
wherein the one or more SaaS applications include at least one of:
- a calculation module configured to compare color measurement data to color reference data to assess and/or to classify the color measurement data;
- a device configuration module configured to access configuration data of one or more color measurement devices;
- a measurement data module configured to allow the user to access and to trigger, via a browser based and/or the on-premises based GUI, a color measurement device to perform one color measurement or a series of color measurements;
- a data interface configured to provide the color reference data to the calculation module and/or configured to provide the color measurement data to the calculation module;
- an authentication module configured to provide an interface through which the user can authenticate to access a user-requested service.

According to a third aspect of the present invention, there is provided a system that comprises:
- a computing device configured to present one or more on-premises applications in a graphical user interface, GUI, for providing one or more color quality control functionalities;

wherein the GUI comprises one or more macro language widgets including a plurality of macro building blocks with each macro building block representing a dedicated functionality comprising a predefined operation and/or a predefined workflow for the associated macro building block; wherein at least one macro building block is correlated with at least one of the one or more on-premises applications; and
wherein the GUI is configured to allow a user to select a number of macro building blocks and to connect them with each other via socket connections to provide a desired script, which is executable to create a customized protocol to provide a sequence of functionalities, and
wherein the one or more on-premises applications include at least one of:
   - a calculation module configured to compare color measurement data to color reference data to assess and/or to classify the color measurement data;
   - a device configuration module configured to access configuration data of one or more color measurement devices;
   - a measurement data module configured to allow the user to access and to trigger, via the webpage and/or the application program, a color measurement device to perform one color measurement or a series of color measurements;
   - a data interface configured to provide the color reference data to the calculation module and/or configured to provide the color measurement data to the calculation module;
   - an authentication module configured to provide an interface through which the user can authenticate to access a user-requested service.

According to another aspect of the present invention, there is provided a computer program element comprising instructions which, when executed by a computer processor, causes the computer processor to perform the steps according to the first aspect and any associated example.

According to a further aspect of the present invention, there is provided a computer readable medium having stored the program element.

As used herein, the term "software-as-a-service (SaaS)" refers to the capability provided to the consumer being to use the provider's applications running on a cloud infrastructure. The applications are accessible from various client devices through a thin client interface such as a web browser (e.g., web-based email). The consumer does not manage or control the underlying cloud infrastructure including network, servers, operating systems, storage, or even individual application capabilities, with the possible exception of limited user-specific application configuration settings.

As used herein, the term "module" may refer to, be part of, or include an Application Specific Integrated Circuit (ASIC), an electronic circuit, a processor (shared, dedicated, or group) and/or memory (shared, dedicated, or group) that execute one or more software or firmware programs, a combinational logical circuit, and/or other suitable components that provide the described functionality.

It should be appreciated that all combinations of the foregoing concepts and additional concepts discussed in greater detail below (provided such concepts are not mutually inconsistent) are contemplated as being part of the inventive subject matter disclosed herein. In particular, all combinations of claimed subject matter appearing at the end of this disclosure are contemplated as being part of the inventive subject matter disclosed herein.

These and other aspects of the invention will be apparent from and elucidated with reference to the embodiment(s) described hereinafter.

### BRIEF DESCRIPTION OF THE DRAWINGS

In the drawings, like reference characters generally refer to the same parts throughout the different views. Also, the drawings are not necessarily to scale, emphasis instead generally being placed upon illustrating the principles of the invention.
Fig. 1 is a flowchart that illustrates a computer-implemented method according to some embodiments of the present disclosure.
Fig. 2 shows an exemplary customized workflow.
Fig. 3 schematically shows a system according to some embodiments of the present disclosure.
Fig. 4 schematically shows a system according to some other embodiments of the present disclosure.

### DETAILED DESCRIPTION OF EMBODIMENTS

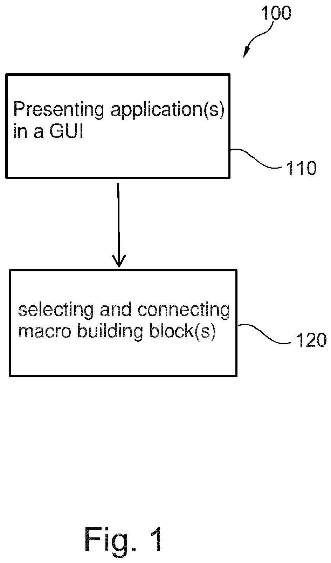

Fig. 1 is a flowchart that illustrates a computer-implemented method 100 according to the first aspect of the present disclosure.

The computer-implemented method 100 may be implemented as a device, module or related component in a set of logic instructions stored in a non-transitory machine- or computer-readable storage medium such as random access memory (RAM), read only memory (ROM), programmable ROM (PROM), firmware, flash memory, etc., in configurable logic such as, for example, programmable logic arrays (PLAs), field programmable gate arrays (FPGAs), complex programmable logic devices (CPLDs), in fixed-functionality hardware logic using circuit technology such as, for example, application specific integrated circuit (ASIC), complementary metal oxide semiconductor (CMOS) or transistor-transistor logic (TTL) technology, or any combination thereof. For example, computer program code to carry out operations shown in the method 100 may be written in any combination of one or more programming languages, including a language such as JAVA, SMALLTALK, C++, Python, TypeScript, JavaScript or the like and conventional procedural programming languages, such as the "C" programming language or similar programming languages.

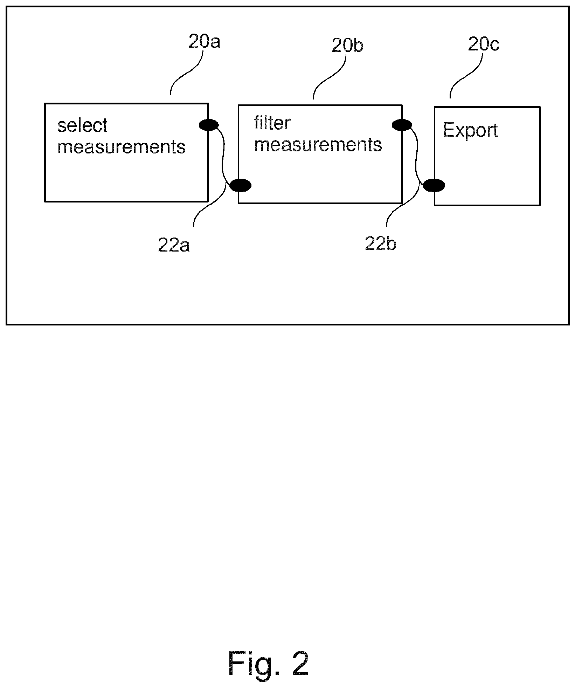

In step 110, one or more applications are presented in a GUI. The one or more applications may include one or more SaaS applications for providing one or more color quality control functionalities. Alternatively or additionally, the one or more applications may include one or more on-premises applications. The GUI comprises one or more macro language widgets including a plurality of macro building blocks, such as macro building blocks 22a, 22b, 22c shown in Fig. 2, with each macro building block representing a dedicated functionality. At least one macro building block is correlated with at least one SaaS application or at least one on-premises application.

In other words, it is proposed to apply the visual macro programming concept to a colorimetric software application. The workflows may thus be depicted phenomenologically and intuitively with macro building blocks with the following exemplary functionalities: "perform a measurement with device X", "download the measurement from device X", "rename all measurements made on a certain date", etc. For example, Fig. 2 illustrates three exemplary macro building blocks with the following functionalities: "select measurements", "filter measurements", and "export". This may offer the possibility to implement these building blocks and let the customer use these blocks as visual component, which is connectable with other ones or give some additional, customized input. The proposed method may be easily accessible for untrained users.

In some examples, the colorimetric software application may be made available for a user in terms of SaaS. In other words, the user may consume the frontend of the application via a web browser, whereas relevant business logic actions are executed in a cloud-deployed micro-service infrastructure. In particular, the macro language may be provided as a dedicated module of the GUI, whereas the actual logic of individual macros is distributed over a variety of services (cloud and/or local). The GUI may e.g. have an Angular code base whose product is executable within a web browser. A product, e.g. JavaScript code, obtained from e.g. the Angular code base is executable within a browser and hence visualisable on every device providing a browser.

Examples of the cloud-deployed micro-service infrastructure may include private cloud, community cloud, public cloud, and hybrid cloud.

Private cloud: the cloud infrastructure is operated solely for an organization. It may be managed by the organization or a third party and may exist on-premises or off-premises.

Community cloud: the cloud infrastructure is shared by several organizations and supports a specific community that has shared concerns (e.g., mission, security requirements, policy, and compliance considerations). It may be managed by the organizations or a third party and may exist on-premises or off-premises.

Public cloud: the cloud infrastructure is made available to the general public or a large industry group and is owned by an organization selling cloud services.

Hybrid cloud: the cloud infrastructure is a composition of two or more clouds (private, community, or public) that remain unique entities but are bound together by standardized or proprietary technology that enables data and application portability (e.g., cloud bursting for load balancing between clouds).

In some other examples, the colorimetric software application may be deployed on-premises, e.g. using an on-premises server connected to one or more networks, such as public/private networks, secure/unsecure networks, wired/wireless networks, etc. An on-premises server may be directly connected to a private network within a client's premises. The visual macro language is not only capable of simplifying a certain part of an on-premises software, e.g. controlling connected (measuring-) devices, but also to address any functionality that is offered by any service of the off-premise construct. The one or more on-premises applications may include a web browser executable application.

In addition, a "hybrid" environment is also possible in which both on-premises and cloud environments will co-exist, and composite applications may span both environments. For example, a hybrid environment may be used where mission critical data and applications reside on-premises and other, less critical, data and applications may be deployed in the cloud.

In step 120, a number of macro building blocks are selected via the GUI. They are connected with each other via socket connections, such as socket connections 22a, 22b shown in Fig. 2, to provide a desired script, which is executable to create a customized protocol to provide a sequence of functionalities.

In other words, the macro language controls the colorimetric software application by calling a sequence of arbitrary functionalities specified by the user.

The visual programming concept is realized as follows:
- The user opens the dedicated macro language module/widget within the GUI of the colorimetric software application.
- Within this widget, the user can choose from a broad variety of macro building blocks, also referred to as nodes, with each node having a dedicated functionality/responsibility.
- The nodes embody functionalities, which range from trivial to complex operations and/or workflows. In addition, a node may offer the possibility of additional customization, e.g. by parameter inputs.
- The user selects a number of nodes and connects them with each other via socket connections. Thus, he/she can generate highly customized protocols, which - for the user - represent a simple sequential workflow, but in fact hide all the complexity of any operation and/or workflow in any of the services of the colorimetric software application conglomerate.
- Once nodes are selected and connected, the user can trigger the execution of the macro (i.e. the connected workflow) by e.g. pressing a button. The execution of a macro may also be triggered remotely, on login, on logout, on a fixed interval, by another macro, by external signals, etc. The options are manifold.

The user is hence able to generate any workflow he/she can imagine in the context of the colorimetric software application, i.e. in the context of colorimetry in general. This may be of major importance for the customers, because all of them have highly customized workflows, which are not standardized in any way- which means that may be impossible to offer a colorimetric software which covers the needs of all customers on one hand, and on the other hand offer a GUI which is user-friendly, intuitive and easy to use.

Exemplary functionalities represented by the macro building blocks are provided as follows:

### Colorimetric measurements

Prerequisite: The user makes some offline colorimetric measurements and connects the measurement device to the evaluating device on which the GUI of the colorimetric software runs - e.g. a regular Windows notebook.

One or more macro building blocks are configured to provide at least one of the following functionalities:
- loading all measurements from the measurement device and import them into the colorimetric software application;
- setting a reference measurement, calculate color values and apply a tolerance set to the measurement set;
- marking all measurements which deviate too much from the reference with a red background color;
- storing the measurements in the local/cloud database;
- when a deviation is too prominent, sending a push messages to the supervisor of the employee; and
- if the deviation for a certain amount of measurements is too high, stopping production.

### Format conversion

One or more macro building blocks are configured to provide at least one of the following functionalities:
- taking some measurements and convert those into another format, i.e. send those to the backend (business logic) and apply certain conversion routines; and
- putting the resulting data into a group local/cloud storage.

### Arrangement sharing

One or more macro building blocks are configured to provide at least one of the following functionalities:
- applying a certain arrangement of widgets to the user's GUI; and
- sharing this arrangement with colleagues via email or push notification.

### File management

One or more macro building blocks are configured to provide at least one of the following functionalities:
- starting a locally running service;
- searching for measurement files in certain directories of the local file system; and
- checking for all locally connected measurement devices.

One skilled in the art would understand that the method of the present disclosure is also useful for providing macro building blocks to address any functionality that is offered by any service of the cloud, on-premises construct, and off-premise construct.

The one or more SaaS applications include one or more of the following modules:
- a calculation module configured to compare color measurement data to color reference data to assess and/or to classify the color measurement data;
- a device configuration module configured to access configuration data of one or more color measurement devices;
- a measurement data module configured to allow the user to access and to trigger, via a browser based and/or the on-premises based GUI, a color measurement device to perform one color measurement or a series of color measurements;
- a data interface configured to provide the color reference data to the calculation module and/or configured to provide the color measurement data to the calculation module; and
- an authentication module configured to provide an interface through which the user can authenticate to access a user-requested service.

Similarly, the one or more on-premises applications include one or more of the following modules:
- a calculation module configured to compare color measurement data to color reference data to assess and/or to classify the color measurement data;
- a device configuration module configured to access configuration data of one or more color measurement devices;
- a measurement data module configured to allow the user to access and to trigger, via the webpage and/or the application program, a color measurement device to perform one color measurement or a series of color measurements;
- a data interface configured to provide the color reference data to the calculation module and/or configured to provide the color measurement data to the calculation module; and
- an authentication module configured to provide an interface through which the user can authenticate to access a user-requested service.

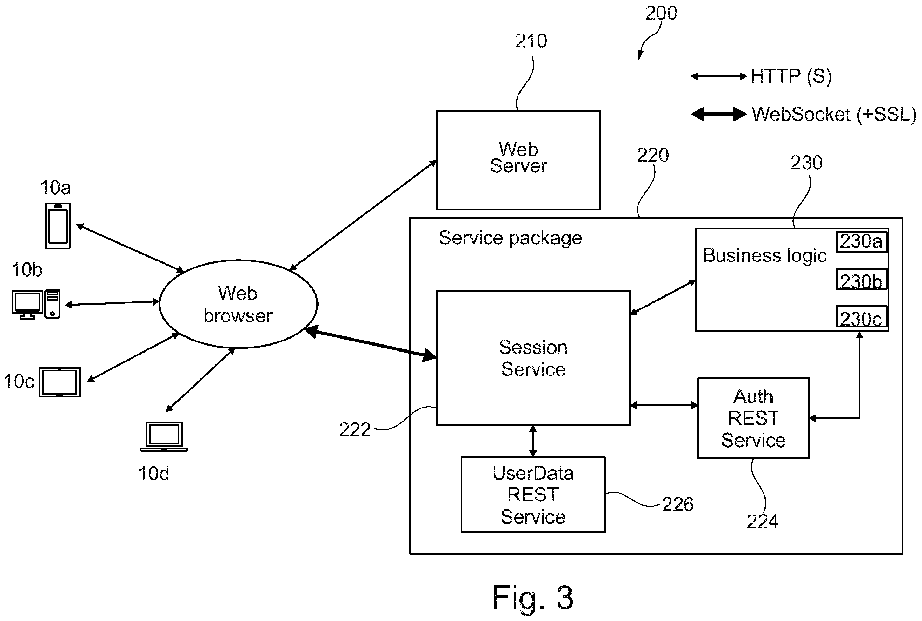

Fig. 3 schematically shows a system 200 according to some embodiments of the present disclosure. The system 200 comprises a web server 210, a SaaS service provider 220, and a client device 10, such as client devices 10a-10d illustrated in Fig. 3.

The web server 210 is configured to present one or more SaaS applications in a GUI for providing one or more color quality control functionalities. The GUI comprises one or more macro language widgets including a plurality of macro building blocks with each macro building block representing a dedicated functionality. The at least one macro building block is correlated with at least one SaaS application. The GUI is configured to allow a user to select a number of macro building blocks and to connect them with each other via socket connections to provide a desired script, which is executable to create a customized protocol to provide a sequence of functionalities.

The web server 210 may be a server software, or hardware dedicated to running said software, that can satisfy World Wide Web client requests. The web server may process incoming network requests over HTTP(s) and several other related protocols for communication between the web browser and the web server unit. For example, the web server 210 may be an Apache HTTP Server.

The layout of the webpage may use HTML as well as Cascading Style Sheets (CSS) or Bootstrap. In an example, the GUI may have an Angular code base whose product is executable within a web browser. Accordingly, it may be visualized on every device providing a browser. The Angular framework may be used to create JavaScript and/or TypeScript code for the webpage.

The SaaS service provider 220 may be a software, or hardware dedicated to running said software, to provide a SaaS service package. For example, the SaaS service provider 220 may comprise a session service module 222 configured to route the user's request to each service provided by the SaaS service provider 220. The session service module 222 may serve as a " proxy server" such that all communications with other modules of the SaaS service provider 220, including e.g., authentication module, is routed via the session service module 222. The communications between the web browser of client device 10a-10d and the session service module 222 may be achieved using web sockets, whereas the communications between the session service module 222 and other modules of the SaaS service provider 220 may be achieved using HTTP/HTTPs. The session service 222 may store session data. The session service 222 may be multithreaded, i.e. a threadpool for processing multiple client requests.

In an example, the SaaS service provider 220 may comprise a calculation module 230a. The calculation module 230a may be a software, or hardware dedicated to running said software, configured to calculate the outstanding difference between the reference color and the measured color e.g., of the paint coating of a car. The result is reported to the session service module 222, and communicated to the web browser of the client device 10.

In an example, the SaaS service provider 220 may further comprise a device configuration module 230b configured to access a configuration database that stores configuration data of one or more color measurement devices. The device configuration module 230b may be configured to provide the configuration data to at least one color measurement device selected by the user for performing color measurement. The device configuration module 230 may be a further function unit in the business logic 230. In an example, the configuration database may be stored centrally in a data storage of the SaaS service provider. In an example, the configuration database may be stored in a cloud data storage. Accordingly, the user may access the measurement device without installing any driver.

In an example, the SaaS service provider 220 may further comprise a measurement data module 230c configured to allow the user to access and to trigger, via the webpage and/or the application program, a color measurement device to perform color measurement. For example, the communications between the web browser and the measurement device may be achieved using HTTP/HTTPs. The measurement device may start using the configuration file generated by the web browser. The communications between the measurement device and the session service 222 may be based on Web socket. Accordingly, the user may access measurement devices triggered by the user directly from the browser. An interface may also be provided for robotic usage.

Optionally, the SaaS service provider 220 may further comprise an authentication module 224 configured to be an interface through which the user can authenticate to access a user-requested service. The authentication module 224 may determine whether the user is authorized to access a function unit, e.g., calculation module, of the business logic 230 to obtain the requested service using an authorization service. Verifying that the user is authorized to call the business logic 230 may include verifying a user credential received with the call to the function units of the business logic 230 against a known user credential database. For example, the authorization service may compare a received user credential against known user credentials to determine a match. The user credential may be a username and an associated password, an authentication token, a license key, or another suitable authentication credential. The authorization service may also require the user to perform a multi-factor authentication.

If it is determined that the user is not authorized to call the function unit, e.g., the calculation module of the business logic, an error message is returned to the client device.

If, however, it is determined that the user is authorized to call the function unit, e.g., calculation unit, the user's request is routed from the session server to a function unit of the business logic 230 to process the request.

Optionally, the SaaS service provider 222 may further comprise a user data service module 226 configured to store session information. The user data service module 226 may enable the user to resume a session on other measurement devices. Any update to the user's GUI may be reported by the session service module 222 to the user data service module 226. If the user wishes to restore session, session service module 222 may request data from the user data service module 226.

A client device 10, such as a smart phone 10a, personal computer 10b, tablet computer 10c, laptop computer 10d, or other similar computing device, may be utilized by the user to access the service package provided by the SaaS service provider 220.

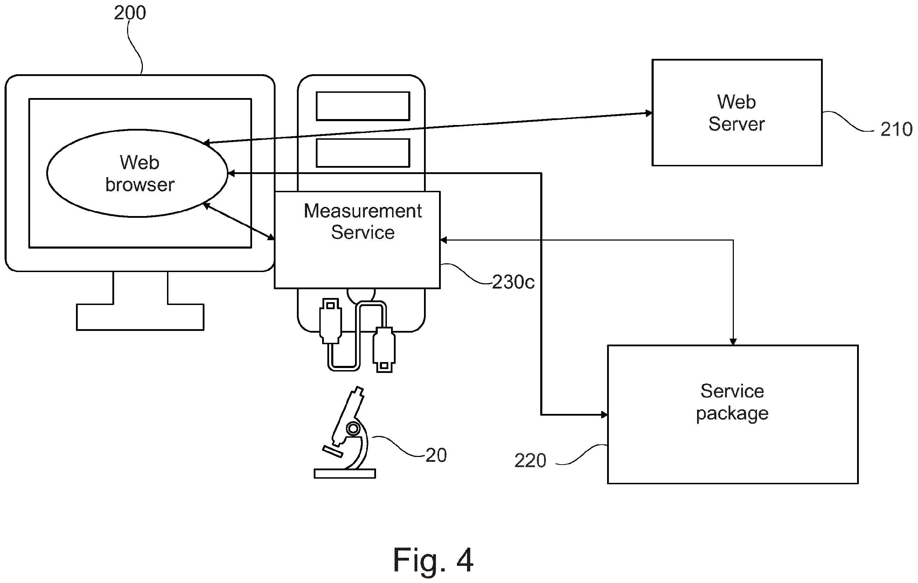

Fig. 4 schematically shows a system 200 according to some other embodiments of the present disclosure. In this example, the system 200 is implemented in a computing device 20 configured to present one or more on-premises applications in a GUI for providing one or more color quality control functionalities.

In some examples, the computing device 20 may be a personal computer as illustrated in Fig. 3. In other words, all services may be provided locally without the need to communicate with a remote server. In this example, the communications between the modules may be achieved using Inter-process communication (IPC) instead of HTTP/HTTPs as shown in Fig. 3.

In some other examples, the computing device 20 may be an on-premises server. In this case, desktop virtualization involves storing a logical representation of a personal desktop computer on remote servers and implementing the functionality of the desktop on the on-premises servers. In many cases, the remote servers implement multiple versions of virtual desktops, where each version of the virtual desktop is individualized for a single user who accesses the on-premises servers via a network. Although specific tasks assigned to the remote servers and the user terminals differ based on implementations, the on-premises servers often perform most of the heavy processing tasks while the user terminals often perform relatively light processing tasks such as generating graphical user interfaces and tracking user input activities. By leveraging the resources of the remote servers, even a thin client device with limited capabilities can perform operations that require high-performance computing devices.

A client, such as "localMeasurement.exe", may be installed on the client device. The user may click "startLocalMeasurement" to start the workflow performed by the client. An example of the workflow is as follows:
- Start the web server unit on http://localhost:1234.
- Web browser requests data via HTTP from the web server unit.
   - Is the measurement done?
   - send result.
- Measurement data is directly sent to the measurement database. The measurement data may also be sent to the web browser and then sent to the measurement database.

In both cases (personal computer and on-premises server), the GUI comprises one or more macro language widgets including a plurality of macro building blocks with each macro building block representing a dedicated functionality. At least one macro building block is correlated with at least one on-premises application. The GUI is configured to allow a user to select a number of macro building blocks and to connect them with each other via socket connections to provide a desired script, which is executable to create a customized protocol to provide a sequence of functionalities.

All definitions, as defined and used herein, should be understood to control over dictionary definitions, and/or ordinary meanings of the defined terms.

The indefinite articles "a" and "an", as used herein in the specification and in the claims, unless clearly indicated to the contrary, should be understood to mean "at least one".

The phrase "and/or", as used herein in the specification and in the claims, should be understood to mean "either or both" of the elements so conjoined, i.e., elements that are conjunctively present in some cases and disjunctively present in other cases. Multiple elements listed with " and/or" should be construed in the same fashion, i.e., "one or more" of the elements so conjoined. Other elements may optionally be present other than the elements specifically identified by the "and/or" clause, whether related or unrelated to those elements specifically identified.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of" or, when used in the claims, "consisting of" will refer to the inclusion of exactly one element of a number or list of elements. In general, the term "or" as used herein shall only be interpreted as indicating exclusive alternatives (i.e. "one or the other but not both") when preceded by terms of exclusivity, such as "either", "one of", "only one of", or "exactly one of".

As used herein in the specification and in the claims, the phrase "at least one", in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified.

In the claims, as well as in the specification above, all transitional phrases such as "comprising", "including", "carrying", "having", "containing", "involving", "holding", "composed of", and the like are to be understood to be open-ended, i.e., to mean including but not limited to. Only the transitional phrases "consisting of" and "consisting essentially of" shall be closed or semi-closed transitional phrases, respectively.

Furthermore, in this detailed description, a person skilled in the art should note that quantitative qualifying terms such as "generally", "substantially", "mostly", and other terms are used, in general, to mean that the referred to object, characteristic, or quality constitutes a majority of the subject of the reference. The meaning of any of these terms is dependent upon the context within which it is used, and the meaning may be expressly modified.

In another exemplary embodiment of the present invention, a computer program or a computer program element is provided that is characterized by being adapted to execute the method steps of the method according to one of the preceding embodiments, on an appropriate system. The computer program element might therefore be stored on a computer unit, which might also be part of an embodiment of the present invention. This computing unit may be adapted to perform or induce a performing of the steps of the method described above. Moreover, it may be adapted to operate the components of the above described apparatus. The computing unit can be adapted to operate automatically and/or to execute the orders of a user. A computer program may be loaded into a working memory of a data processor. The data processor may thus be equipped to carry out the method of the invention.

This exemplary embodiment of the invention covers both, a computer program that right from the beginning uses the invention and a computer program that by means of an update turns an existing program into a program that uses the invention.

Further on, the computer program element might be able to provide all necessary steps to fulfil the procedure of an exemplary embodiment of the method as described above.

According to a further exemplary embodiment of the present invention, a computer readable medium, such as a CD-ROM, is presented wherein the computer readable medium has a computer program element stored on it which computer program element is described by the preceding section.

A computer program may be stored and/or distributed on a suitable medium, such as an optical storage medium or a solid state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

All features can be combined to provide a synergetic effect that is more than the simple summation of the features.

While several inventive embodiments have been described and illustrated herein, those of ordinary skill in the art will readily envision a variety of other means and/or structures for performing the function and/or obtaining the results and/or one or more of the advantages described herein, and each of such variations and/or modifications is deemed to be within the scope of the inventive embodiments described herein. More generally, those skilled in the art will readily appreciate that all parameters, dimensions, materials, and configurations described herein are meant to be exemplary and that the actual parameters, dimensions, materials, and/or configurations will depend upon the specific application or applications for which the inventive teachings is/are used. It is to be understood that the foregoing embodiments are presented by way of example only and that, within the scope of the appended claims, inventive embodiments may be practiced otherwise than as specifically described.

## Claims

1. A computer-implemented method (100) for providing color quality control applications to a user, the method comprising:
- presenting (110) one or more applications in a graphical user interface, GUI, wherein the one or more applications include (i) one or more software-as-a-service, SaaS, applications for providing one or more color quality control functionalities and/or (ii) one or more on-premises applications for providing one or more color quality control functionalities;
wherein the GUI comprises one or more macro language widgets including a plurality of macro building blocks with each macro building block representing a dedicated functionality comprising a predefined operation and/or a predefined workflow for the associated macro building block; wherein at least one macro building block is correlated with at least one of the one or more SaaS applications and/or at least one of the one or more on-premises applications; and
- selecting (120), via the GUI, a number of macro building blocks and connecting them with each other via socket connections to provide a desired script, which is executable to create a customized protocol to provide a sequence of functionalities,
wherein the one or more SaaS applications include at least one of:
- a calculation module configured to compare color measurement data to color reference data to assess and/or to classify the color measurement data;
- a device configuration module configured to access configuration data of one or more color measurement devices;
- a measurement data module configured to allow the user to access and to trigger, via a browser based and/or an on-premises based GUI, a color measurement device to perform one color measurement or a series of color measurements;
- a data interface configured to provide the color reference data to the calculation module and/or configured to provide the color measurement data to the calculation module; or
- an authentication module configured to provide an interface through which the user can authenticate to access a user-requested service; and
wherein the one or more on-premises applications include at least one of:
- a calculation module configured to compare color measurement data to color reference data to assess and/or to classify the color measurement data;
- a device configuration module configured to access configuration data of one or more color measurement devices;
- a measurement data module configured to allow the user to access and to trigger, via a webpage and/or an application program, a color measurement device to perform one color measurement or a series of color measurements;
- a data interface configured to provide the color reference data to the calculation module and/or configured to provide the color measurement data to the calculation module; or
- an authentication module configured to provide an interface through which the user can authenticate to access a user-requested service.

2. Computer-implemented method according to claim 1,
wherein the one or more SaaS applications include a web browser executable application.

3. Computer-implemented method according to claim 1,
wherein the one or more on-premises applications include a web browser executable application.

4. Computer-implemented method according to any one of the preceding claims,
wherein at least one macro building block is configured to receive parameter inputs.

5. Computer-implemented method according to any one of the preceding claims
wherein the GUI has an Angular code base whose product is executable within a web browser.

6. Computer-implemented method according to any one of the preceding claims, further comprising at least one of:
- sharing an arrangement of macro building blocks via an email or a push notification;
- storing an arrangement of macro building blocks; and/or
- loading an arrangement of macro building block.

7. A system (200), comprising:
- a web server (210) configured to present one or more SaaS applications in a graphical user interface, GUI, for providing one or more color quality control functionalities;
wherein the GUI comprises one or more macro language widgets including a plurality of macro building blocks with each macro building block representing a dedicated functionality comprising a predefined operation and/or a predefined workflow for the associated macro building block; wherein at least one macro building block is correlated with at least one of the one or more SaaS applications; and
wherein the GUI is configured to allow a user to select a number of macro building blocks and to connect them with each other via socket connections to provide a desired script, which is executable to create a customized protocol to provide a sequence of functionalities; and
- a client device (10, 10a, 10b, 10c, 10d) configured to display the GUI presented by the web server and to allow a user to select a number of macro building blocks and to connect them with each other via socket connections to provide a desired script,
wherein the one or more SaaS applications include at least one of:
- a calculation module configured to compare color measurement data to color reference data to assess and/or to classify the color measurement data;
- a device configuration module configured to access configuration data of one or more color measurement devices;
- a measurement data module configured to allow the user to access and to trigger, via a browser based and/or an on-premises based GUI, a color measurement device to perform one color measurement or a series of color measurements;
- a data interface configured to provide the color reference data to the calculation module and/or configured to provide the color measurement data to the calculation module; or
- an authentication module configured to provide an interface through which the user can authenticate to access a user-requested service.

8. A system (200), comprising:
- a computing device configured to present one or more on-premises applications in a graphical user interface, GUI, for providing one or more color quality control functionalities;
wherein the GUI comprises one or more macro language widgets including a plurality of macro building blocks (20a, 20b, 20c) with each macro building block representing a dedicated functionality comprising a predefined operation and/or a predefined workflow for the associated macro building block;
wherein at least one macro building block is correlated with at least one of the one or more on-premises applications; and
wherein the GUI is configured to allow a user to select a number of macro building blocks and to connect them with each other via socket connections (22a, 22b) to provide a desired script, which is executable to create a customized protocol to provide a sequence of functionalities,
wherein the one or more on-premises applications include at least one of:
- a calculation module configured to compare color measurement data to color reference data to assess and/or to classify the color measurement data;
- a device configuration module configured to access configuration data of one or more color measurement devices;
- a measurement data module configured to allow the user to access and to trigger, via a webpage and/or an application program, a color measurement device to perform one color measurement or a series of color measurements;
- a data interface configured to provide the color reference data to the calculation module and/or configured to provide the color measurement data to the calculation module; or
- an authentication module configured to provide an interface through which the user can authenticate to access a user-requested service.

9. A computer program element comprising instructions which, when executed by a computer processor, causes the computer processor to perform the steps of any one of claims 1 to 6.

10. A computer readable medium having stored the program element of claim 9.

## Patentansprüche

1. Computerimplementiertes Verfahren (100) zum Bereitstellen von Farbqualitätskontrollanwendungen für einen Benutzer, wobei das Verfahren Folgendes umfasst:
- Darstellen (110) einer oder mehrerer Anwendungen auf einer grafischen Benutzeroberfläche, GUI, wobei die eine oder die mehreren Anwendungen (i) eine oder mehrere Software-as-a-Service-Anwendungen, SaaS-Anwendungen, zum Bereitstellen einer oder mehrerer Farbqualitätskontrollfunktionalitäten und/oder (ii) eine oder mehrere Vor-Ort-Anwendungen zum Bereitstellen einer oder mehrerer Farbqualitätskontrollfunktionalitäten beinhalten;
wobei die GUI ein oder mehrere Makrosprachen-Widgets umfasst, die eine Mehrzahl von Makroaufbaublöcken beinhalten, wobei jeder Makroaufbaublock eine dedizierte Funktionalität darstellt, die eine vordefinierte Operation und/oder einen vordefinierten Workflow für den assoziierten Makroaufbaublock umfasst; wobei mindestens ein Makroaufbaublock mit mindestens einer der einen oder mehreren SaaS-Anwendungen und/oder mindestens einer der einen oder mehreren Vor-Ort-Anwendungen korreliert ist; und
- Auswählen (120) einer Anzahl von Makrobausteinen über die GUI und Verbinden derselben miteinander über Socket-Verbindungen, um ein gewünschtes Skript bereitzustellen, das ausführbar ist, um ein angepasstes Protokoll zu erstellen, um eine Sequenz von Funktionalitäten bereitzustellen,
wobei die eine oder die mehreren SaaS-Anwendungen mindestens eines von Folgenden beinhalten:
- ein Berechnungsmodul, das dazu ausgelegt ist, Farbmessdaten mit Farbreferenzdaten zu vergleichen, um die Farbmessdaten auszuwerten und/oder zu klassifizieren;
- ein Vorrichtungskonfigurationsmodul, das dazu ausgelegt ist, auf Konfigurationsdaten einer oder mehrerer Farbmessvorrichtungen zuzugreifen;
- ein Messdatenmodul, das dazu ausgelegt ist, dem Benutzer zu ermöglichen, über eine GUI auf Browserbasis und/oder auf Vor-Ort-Basis auf eine Farbmessvorrichtung zuzugreifen und diese auszulösen, um eine Farbmessung oder eine Reihe von Farbmessungen durchzuführen;
- eine Datenschnittstelle, die dazu ausgelegt ist, die Farbreferenzdaten an das Berechnungsmodul bereitzustellen, und/oder dazu ausgelegt ist, die Farbmessdaten an das Berechnungsmodul bereitzustellen; oder
- ein Authentifizierungsmodul, das dazu ausgelegt ist, eine Schnittstelle bereitzustellen, über die sich der Benutzer authentifizieren kann, um auf einen vom Benutzer angeforderten Dienst zuzugreifen; und
wobei die eine oder die mehreren Vor-Ort-Anwendungen mindestens eines von Folgenden beinhalten:
- ein Berechnungsmodul, das dazu ausgelegt ist, Farbmessdaten mit Farbreferenzdaten zu vergleichen, um die Farbmessdaten auszuwerten und/oder zu klassifizieren;
- ein Vorrichtungskonfigurationsmodul, das dazu ausgelegt ist, auf Konfigurationsdaten einer oder mehrerer Farbmessvorrichtungen zuzugreifen;
- ein Messdatenmodul, das dazu ausgelegt ist, dem Benutzer zu ermöglichen, über eine Webseite und/oder ein Anwendungsprogramm auf eine Farbmessvorrichtung zuzugreifen und diese auszulösen, um eine Farbmessung oder eine Reihe von Farbmessungen durchzuführen;
- eine Datenschnittstelle, die dazu ausgelegt ist, die Farbreferenzdaten an das Berechnungsmodul bereitzustellen, und/oder dazu ausgelegt ist, die Farbmessdaten an das Berechnungsmodul bereitzustellen; oder
- ein Authentifizierungsmodul, das dazu ausgelegt ist, eine Schnittstelle bereitzustellen, über die sich der Benutzer authentifizieren kann, um auf einen vom Benutzer angeforderten Dienst zuzugreifen.

2. Computerimplementiertes Verfahren nach Anspruch 1, wobei die eine oder die mehreren SaaS-Anwendungen eine ausführbare Webbrowser-Anwendung beinhalten.

3. Computerimplementiertes Verfahren nach Anspruch 1, wobei die eine oder die mehreren Vor-Ort-Anwendungen eine ausführbare Webbrowser-Anwendung beinhalten.

4. Computerimplementiertes Verfahren nach einem der vorhergehenden Ansprüche,
wobei mindestens ein Makroaufbaublock dazu ausgelegt ist, Parametereingaben zu empfangen.

5. Computerimplementiertes Verfahren nach einem der vorhergehenden Ansprüche,
wobei die GUI eine Winkelcodebasis aufweist, deren Produkt innerhalb eines Webbrowsers ausführbar ist.

6. Computerimplementiertes Verfahren nach einem der vorhergehenden Ansprüche, ferner umfassend mindestens eines von Folgendem:
- Verteilen einer Anordnung von Makrobausteinen per E-Mail oder Push-Benachrichtigung;
- Speichern einer Anordnung von Makrobausteinen; und/oder
- Laden einer Anordnung von Makrobausteinen.

7. System (200), umfassend:
- einen Webserver (210), der dazu ausgelegt ist, eine oder mehrere SaaS-Anwendungen auf einer grafischen Benutzeroberfläche, GUI, zum Bereitstellen einer oder mehrerer Farbqualitätskontrollfunktionalitäten darzustellen;
wobei die GUI ein oder mehrere Makrosprachen-Widgets umfasst, die eine Mehrzahl von Makroaufbaublöcken beinhalten, wobei jeder Makroaufbaublock eine dedizierte Funktionalität darstellt, die eine vordefinierte Operation und/oder einen vordefinierten Workflow für den assoziierten Makroaufbaublock umfasst; wobei mindestens ein Makroaufbaublock mit mindestens einer der einen oder mehreren SaaS-Anwendungen korreliert ist; und
wobei die GUI dazu ausgelegt ist, einem Benutzer zu ermöglichen, eine Anzahl von Makrobausteinen auszuwählen und sie über Socket-Verbindungen miteinander zu verbinden, um ein gewünschtes Skript bereitzustellen, das ausführbar ist, um ein angepasstes Protokoll zu erzeugen, um eine Sequenz von Funktionalitäten bereitzustellen; und
- eine Client-Vorrichtung (10, 10a, 10b, 10c, 10d), die dazu ausgelegt ist, die vom Webserver dargestellte GUI anzuzeigen und einem Benutzer zu ermöglichen, eine Anzahl von Makrobausteinen auszuwählen und sie über Socket-Verbindungen miteinander zu verbinden, um ein gewünschtes Skript bereitzustellen,
wobei die eine oder die mehreren SaaS-Anwendungen mindestens eines von Folgenden beinhalten:
- ein Berechnungsmodul, das dazu ausgelegt ist, Farbmessdaten mit Farbreferenzdaten zu vergleichen, um die Farbmessdaten auszuwerten und/oder zu klassifizieren;
- ein Vorrichtungskonfigurationsmodul, das dazu ausgelegt ist, auf Konfigurationsdaten einer oder mehrerer Farbmessvorrichtungen zuzugreifen;
- ein Messdatenmodul, das dazu ausgelegt ist, dem Benutzer zu ermöglichen, über eine GUI auf Browserbasis und/oder auf Vor-Ort-Basis auf eine Farbmessvorrichtung zuzugreifen und diese auszulösen, um eine Farbmessung oder eine Reihe von Farbmessungen durchzuführen;
- eine Datenschnittstelle, die dazu ausgelegt ist, die Farbreferenzdaten an das Berechnungsmodul bereitzustellen, und/oder dazu ausgelegt ist, die Farbmessdaten an das Berechnungsmodul bereitzustellen; oder
- ein Authentifizierungsmodul, das dazu ausgelegt ist, eine Schnittstelle bereitzustellen, über die sich der Benutzer authentifizieren kann, um auf einen vom Benutzer angeforderten Dienst zuzugreifen.

8. System (200), umfassend:
- eine Computervorrichtung, die dazu ausgelegt ist, eine oder mehrere Vor-Ort-Anwendungen auf einer grafischen Benutzeroberfläche, GUI, zum Bereitstellen einer oder mehrerer Farbqualitätssteuerungsfunktionalitäten darzustellen; wobei die GUI ein oder mehrere Makrosprachen-Widgets umfasst, die eine Mehrzahl von Makroaufbaublöcken (20a, 20b, 20c) beinhalten, wobei jeder Makroaufbaublock eine dedizierte Funktionalität darstellt, die eine vordefinierte Operation und/oder einen vordefinierten Workflow für den assoziierten Makroaufbaublock umfasst; wobei mindestens ein Makrobaustein mit mindestens einer der einen oder mehreren Vor-Ort-Anwendungen korreliert ist; und
wobei die GUI dazu ausgelegt ist, einem Benutzer zu ermöglichen, eine Anzahl von Makrobausteinen auszuwählen und sie über Socket-Verbindungen (22a, 22b) miteinander zu verbinden, um ein gewünschtes Skript bereitzustellen, das ausführbar ist, um ein angepasstes Protokoll zu erzeugen, um eine Sequenz von Funktionalitäten bereitzustellen,
wobei die eine oder die mehreren Vor-Ort-Anwendungen mindestens eines von Folgenden beinhalten:
- ein Berechnungsmodul, das dazu ausgelegt ist, Farbmessdaten mit Farbreferenzdaten zu vergleichen, um die Farbmessdaten auszuwerten und/oder zu klassifizieren;
- ein Vorrichtungskonfigurationsmodul, das dazu ausgelegt ist, auf Konfigurationsdaten einer oder mehrerer Farbmessvorrichtungen zuzugreifen;
- ein Messdatenmodul, das dazu ausgelegt ist, dem Benutzer zu ermöglichen, über eine Webseite und/oder ein Anwendungsprogramm auf eine Farbmessvorrichtung zuzugreifen und diese auszulösen, um eine Farbmessung oder eine Reihe von Farbmessungen durchzuführen;
- eine Datenschnittstelle, die dazu ausgelegt ist, die Farbreferenzdaten an das Berechnungsmodul bereitzustellen, und/oder dazu ausgelegt ist, die Farbmessdaten an das Berechnungsmodul bereitzustellen; oder
- ein Authentifizierungsmodul, das dazu ausgelegt ist, eine Schnittstelle bereitzustellen, über die sich der Benutzer authentifizieren kann, um auf einen vom Benutzer angeforderten Dienst zuzugreifen.

9. Computerprogrammelement, umfassend Anweisungen, die bei Ausführung durch einen Computerprozessor den Computerprozessor veranlassen, die Schritte nach einem der Ansprüche 1 bis 6 auszuführen.

10. Computerlesbares Medium, auf dem das Programmelement nach Anspruch 9 gespeichert ist.

## Revendications

1. Procédé (100) mis en œuvre par ordinateur pour fournir des applications de contrôle de qualité de couleur à un utilisateur, le procédé comportant les étapes consistant à :
- présenter (110) une ou plusieurs applications dans une interface graphique d'utilisateur, GUI, l'application ou les applications incluant (i) une ou plusieurs applications de logiciel en tant que service, SaaS, servant à fournir une ou plusieurs fonctionnalités de contrôle de qualité de couleur et/ou (ii) une ou plusieurs applications locales servant à fournir une ou plusieurs fonctionnalités de contrôle de qualité de couleur ;
la GUI comportant une ou plusieurs vignettes actives de langage de macros comprenant une pluralité de blocs constitutifs de macros, chaque bloc constitutif de macro représentant une fonctionnalité dédiée comportant une opération prédéfinie et/ou un flux de travail prédéfini pour le bloc constitutif de macro qui lui est associé ; au moins un bloc constitutif de macro étant corrélé avec l'application ou au moins une des applications SaaS et/ou l'application ou au moins une des applications locales ; et
- sélectionner (120), par l'intermédiaire de la GUI, une multiplicité de blocs constitutifs de macros et les relier entre eux par l'intermédiaire de liaisons par connecteur logiciel pour donner un script souhaité, qui est exécutable pour créer un protocole personnalisé afin de fournir une suite de fonctionnalités,
l'application ou les applications SaaS comprenant au moins un élément parmi :
- un module de calcul configuré pour comparer des données de mesure de couleur à des données de référence de couleur pour évaluer et/ou pour classifier les données de mesure de couleur ;
- un module de configuration de dispositifs configuré pour accéder à des données de configuration d'un ou de plusieurs dispositifs de mesure de couleur ;
- un module de données de mesure configuré pour permettre à l'utilisateur d'accéder à et de déclencher, par l'intermédiaire d'une GUI basée sur un navigateur et/ou basée localement, un dispositif de mesure de couleur pour effectuer une seule mesure de couleur ou une série de mesures de couleur ;
- une interface de données configurée pour fournir les données de référence de couleur au module de calcul et/ou configurée pour fournir les données de mesure de couleur au module de calcul ; ou
- un module d'authentification configuré pour fournir une interface à travers laquelle l'utilisateur peut s'authentifier pour accéder à un service demandé par l'utilisateur ; et
l'application ou les applications locales comprenant au moins un élément parmi :
- un module de calcul configuré pour comparer des données de mesure de couleur à des données de référence de couleur pour évaluer et/ou pour classifier les données de mesure de couleur ;
- un module de configuration de dispositifs configuré pour accéder à des données de configuration d'un ou de plusieurs dispositifs de mesure de couleur ;
- un module de données de mesure configuré pour permettre à l'utilisateur d'accéder à et de déclencher, par l'intermédiaire d'une page web et/ou d'un programme d'application, un dispositif de mesure de couleur pour effectuer une seule mesure de couleur ou une série de mesures de couleur ;
- une interface de données configurée pour fournir les données de référence de couleur au module de calcul et/ou configurée pour fournir les données de mesure de couleur au module de calcul ; ou
- un module d'authentification configuré pour fournir une interface à travers laquelle l'utilisateur peut s'authentifier pour accéder à un service demandé par l'utilisateur.

2. Procédé mis en œuvre par ordinateur selon la revendication 1,
l'application ou les applications SaaS comprenant une application exécutable dans un navigateur web.

3. Procédé mis en œuvre par ordinateur selon la revendication 1,
l'application ou les applications locales comprenant une application exécutable dans un navigateur web.

4. Procédé mis en œuvre par ordinateur selon l'une quelconque des revendications précédentes,
au moins un bloc constitutif de macro étant configuré pour recevoir des entrées de paramètres.

5. Procédé mis en œuvre par ordinateur selon l'une quelconque des revendications précédentes,
la GUI possédant une base de code Angular dont le produit est exécutable à l'intérieur d'un navigateur web.

6. Procédé mis en œuvre par ordinateur selon l'une quelconque des revendications précédentes, comportant en outre au moins une action parmi celles de :
- partager un agencement de blocs constitutifs de macros par l'intermédiaire d'un email ou d'une notification à distribution sélective ;
- stocker un agencement de blocs constitutifs de macros ; et/ou
- charger un agencement de bloc constitutif de macro.

7. Système (200), comportant :
- un serveur web (210) configuré pour présenter une ou plusieurs applications SaaS dans une interface graphique d'utilisateur, GUI, servant à fournir une ou plusieurs fonctionnalités de contrôle de qualité de couleur ;
la GUI comportant une ou plusieurs vignettes actives de langage de macros incluant une pluralité de blocs constitutifs de macros, chaque bloc constitutif de macro représentant une fonctionnalité dédiée comportant une opération prédéfinie et/ou un flux de travail prédéfini pour le bloc constitutif de macro qui lui est associé ; au moins un bloc constitutif de macro étant corrélé avec l'application ou au moins une des applications SaaS ; et la GUI étant configurée pour permettre à un utilisateur de sélectionner une multiplicité de blocs constitutifs de macros et de les relier entre eux par l'intermédiaire de liaisons par connecteur logiciel pour donner un script souhaité, qui est exécutable pour créer un protocole personnalisé afin de fournir une suite de fonctionnalités ; et
- un dispositif client (10, 10a, 10b, 10c, 10d) configuré pour afficher la GUI présentée par le serveur web et pour permettre à un utilisateur de sélectionner une multiplicité de blocs constitutifs de macros et de les relier entre eux par l'intermédiaire de liaisons par connecteur logiciel pour donner un script souhaité, l'application ou les applications SaaS comprenant au moins un élément parmi :
- un module de calcul configuré pour comparer des données de mesure de couleur à des données de référence de couleur pour évaluer et/ou pour classifier les données de mesure de couleur ;
- un module de configuration de dispositifs configuré pour accéder à des données de configuration d'un ou de plusieurs dispositifs de mesure de couleur ;
- un module de données de mesure configuré pour permettre à l'utilisateur d'accéder à et de déclencher, par l'intermédiaire **d'une** GUI basée sur un navigateur et/ou basée localement, un dispositif de mesure de couleur pour effectuer une seule mesure de couleur ou une série de mesures de couleur ;
- une interface de données configurée pour fournir les données de référence de couleur au module de calcul et/ou configurée pour fournir les données de mesure de couleur au module de calcul ; ou
- un module d'authentification configuré pour fournir une interface à travers laquelle l'utilisateur peut s'authentifier pour accéder à un service demandé par l'utilisateur.

8. Système (200), comportant :
- un dispositif informatique configuré pour présenter une ou plusieurs applications locales dans une interface graphique d'utilisateur, GUI, servant à fournir une ou plusieurs fonctionnalités de contrôle de qualité de couleur ;
la GUI comportant une ou plusieurs vignettes actives de langage de macros incluant une pluralité de blocs constitutifs (20a, 20b, 20c) de macros, chaque bloc constitutif de macro représentant une fonctionnalité dédiée comportant une opération prédéfinie et/ou un flux de travail prédéfini pour le bloc constitutif de macro qui lui est associé ;
au moins un bloc constitutif de macro étant corrélé avec l'application ou au moins une des applications locales ; et
la GUI étant configurée pour permettre à un utilisateur de sélectionner une multiplicité de blocs constitutifs de macros et de les relier entre eux par l'intermédiaire de liaisons (22a, 22b) par connecteur logiciel pour donner un script souhaité, qui est exécutable pour créer un protocole personnalisé afin de fournir une suite de fonctionnalités,
l'application ou les applications locales comprenant au moins un élément parmi :
- un module de calcul configuré pour comparer des données de mesure de couleur à des données de référence de couleur pour évaluer et/ou pour classifier les données de mesure de couleur ;
- un module de configuration de dispositifs configuré pour accéder à des données de configuration d'un ou de plusieurs dispositifs de mesure de couleur ;
- un module de données de mesure configuré pour permettre à l'utilisateur d'accéder à et de déclencher, par l'intermédiaire d'une page web et/ou d'un programme d'application, un dispositif de mesure de couleur pour effectuer une seule mesure de couleur ou une série de mesures de couleur ;
- une interface de données configurée pour fournir les données de référence de couleur au module de calcul et/ou configurée pour fournir les données de mesure de couleur au module de calcul ; ou
- un module d'authentification configuré pour fournir une interface à travers laquelle l'utilisateur peut s'authentifier pour accéder à un service demandé par l'utilisateur.

9. Élément de programme informatique comportant des instructions qui, lorsqu'elles sont exécutées par un processeur informatique, amènent le processeur informatique à réaliser les étapes selon l'une quelconque des revendications 1 à 6.

10. Support lisible par ordinateur où est stocké l'élément de programme selon la revendication 9.
